# EUROPEAN PATENT APPLICATION

(11) **EP 4 417 836 A1**
(43) Date of publication of application: **21.08.2024**
(21) Application number: 24157619.8
(22) Date of filing: 14.02.2024
(51) Int. Cl.: F16H 1/32, F16C 19/28, F16C 33/46, F16H 57/08

(54) **SPEED REDUCER AND RESTRAINING MEMBER**

(30) Priority: 16.02.2023 JP 2023022933
(71) Applicant: Nabtesco Corporation, Tokyo (JP)
(72) Inventor: Naruse, Takashi, Tokyo, 102-0093 (JP); Li, HuiLong, Tokyo, 102-0093 (JP); Ogawa, Masahiro, Tokyo, 102-0093 (JP)
(74) Representative: Grünecker Patent- und Rechtsanwälte PartG mbB

(57) **Abstract**

A speed reducer (10) includes an external gear (40), a shaft member (50) having an eccentric member (55) for causing the external gear (40) to eccentrically oscillate, a bearing (15) disposed between the external gear (40) and the shaft member (50) and a restricting member (60). The restricting member (60) has an inner annular portion (70) and an outer portion (80). The inner annular portion (70) has an inner circumferential edge (61) located on the shaft member (50), and the outer portion (80) has an outer edge (62) with a distance from a center of the inner circumferential edge (61) to the outer edge (62) varying among different positions on the outer edge (62). The outer portion (80) restricts the bearing (15) from moving in an axial direction (D1).

## Description

### TECHNICAL FIELD

The present invention relates to a speed reducer and a restraining member.

### BACKGROUND

Eccentric oscillation speed reducers are known as disclosed in, for example, Patent Literature 1. An eccentric oscillation speed reducer includes a shaft member including an eccentric member, an external gear supported on the eccentric member, and a bearing interposed between the eccentric member and the external gear. In the eccentric oscillation speed reducer, the bearing can move in the axial direction. To address this issue, the speed reducer disclosed in Patent Literature 1 includes a block plate fixedly attached to the shaft member. The block plate has a flange extending in a radial direction that is orthogonal to the axis of rotation of the shaft member. As the flange abuts the bearing in the axial direction, the bearing is restricted from moving in the axial direction.

In the speed reducer disclosed in Patent Literature 1, the center of the annular block plate is positioned on the axis of rotation about which the shaft member is rotatable. When the center of the eccentric member is significantly shifted from the axis of rotation, the flange needs to have a large length in the radial direction. If the flange extends long in the radial direction, however, the flange extends beyond the bearing significantly in the radial direction in part of the circular region centered around the axis of rotation. If such is the case, the block plate may possibly touch the surrounding members including the external gear. Such unintentional contact can result in the speed reducer malfunctioning or getting damaged.

Patent Literature 1: Japanese Patent Application Publication No. 2022-135326

### SUMMARY

Because of the above, the bearing, which is interposed between the eccentric member and the external gear, may not be satisfactorily restricted from moving in the axial direction. The present invention is made in light of the above, and the object of the present invention is to provide an eccentric oscillation speed reducer in which the bearing, which is positioned between the eccentric member and the external gear, can be reliably restricted from moving in the axial direction.

An embodiment of the invention relates to the following items <1> to <18>.

<1> A speed reducer including:
an external gear;
a shaft member including an eccentric member for causing the external gear to eccentrically oscillate;
a bearing disposed between the external gear and the shaft member; and
a restricting member having an inner annular portion and an outer portion, the inner annular portion having an inner circumferential edge located on the shaft member, the outer portion having an outer edge with a distance from a center of the inner circumferential edge to the outer edge varying among different positions
on the outer edge, the outer portion restricting the bearing from moving in an axial direction.

<2> The speed reducer of <1>,
wherein the restricting member has a step connecting portion connecting the inner annular portion and the outer portion,
wherein the eccentric member has an annular step on a side surface thereof facing the restricting member with a center of the annular step being shifted from the center of the inner circumferential edge, and
wherein the step and the step connecting portion are in contact with each other, thereby restricting the restricting member and the shaft member from rotating relative to each other.

<3> The speed reducer of <2>, wherein the step and the eccentric member are concentric.

<4> The speed reducer of <2> or <3>, wherein the step connecting portion and the outer edge are concentric.

<5> The speed reducer of any one of <2> to <4>, wherein the inner annular portion and the outer portion are at least partially positioned in a same region in the axial direction.

<6> The speed reducer of <1>, wherein the outer portion has an outer tube located on an outer circumferential surface of the eccentric member.

<7> The speed reducer of <6>, wherein the inner annular portion has an inner tube located on the shaft member.

<8> The speed reducer of any one of <1 > to <7>, wherein the outer portion and the inner annular portion are integrated together.

<9> The speed reducer of <1>, wherein the outer portion has an annular portion that is a separate portion from the inner annular portion and that has an inner circumferential edge located on the shaft member, and
wherein the inner circumferential edge of the outer portion and an outer circumferential edge of the inner annular portion delineate an annular region where the outer portion and the inner annular portion face each other in the axial direction.

<10> The speed reducer of <9>,
wherein the inner annular portion is annular,
wherein the outer portion is annular, and
wherein a center of the outer portion is shifted from a center of the inner annular portion and located on the shaft member.

<11> The speed reducer of <9> or <10>, wherein the eccentric member has, on a side surface thereof facing the restricting member, an annular step that is in contact with the inner circumferential edge of the outer portion.

<12> The speed reducer of any one of <1> to <11 >, wherein a distance from a center of the eccentric member to the outer edge varies among different positions on the outer edge.

<13> The speed reducer of any one of <1 > to <11>, wherein the outer edge and the eccentric member are concentric.

<14> The speed reducer of any one of <1> to <13>, wherein the restricting member faces only a portion of the bearing in the axial direction.

<15> The speed reducer of any one of <1> to <14>, a center of the inner circumferential edge is positioned on an axis of rotation of the shaft member.

<16> A speed reducer including:
an external gear;
a shaft member including an eccentric member for causing the external gear to eccentrically oscillate;
a bearing disposed between the external gear and the shaft member; and
a restricting member having an inner annular portion and an outer portion, the inner annular portion having an inner circumferential edge located on the shaft member, the outer portion having an outer tube located on an outer circumferential surface of the eccentric member, a distance from a center of the inner circumferential edge to the outer tube varying among different positions on the outer tube.

<17> A speed reducer including:
an external gear;
a shaft member including an eccentric member for causing the external gear to eccentrically oscillate;
a bearing disposed between the external gear and the shaft member; and
a restricting member having a first annular portion and a second annular portion, the first annular portion being penetrated by the shaft member and located on the shaft member, the second annular portion being penetrated by the shaft member and located on the shaft member, a center of the second annular portion being shifted from a center of the first annular portion.

<18> A restricting member including:
an inner annular portion having an inner circumferential edge located on a shaft member, the shaft member having an eccentric member of an eccentric oscillation speed reducer; and
an outer portion having an outer edge with a distance from a center of the inner circumferential edge to the outer edge varying among different positions on the outer edge, the outer portion restricting a bearing located on the eccentric member from moving in an axial direction.

The embodiments of the present invention can provide an eccentric oscillation speed reducer in which the bearing, which is positioned between the eccentric member and the external gear, can be reliably restricted from moving in the axial direction.

### BRIEF DESCRIPTION OF THE DRAWINGS

Fig. 1 is a longitudinal sectional view of a speed reducer for describing an embodiment of the invention.
Fig. 2 is a sectional view taken along the line II-II in Fig. 1.
Fig. 3 is a side view illustrating a first specific example of a shaft member and a restricting member applicable to the speed reducer of the embodiment of the present invention.
Fig. 4 is a front view of the restricting member and bearing shown in Fig. 3.
Fig. 5 is a side sectional view showing the restricting member shown in Fig. 4.
Fig. 6 corresponds to Fig. 4 and illustrates a modification example of the restricting member.
Fig. 7 corresponds to Fig. 4 and illustrates another modification example of the restricting member.
Fig. 8 corresponds to Fig. 3 and illustrates yet another modification example of the shaft member and restricting member.
Fig. 9 is a front view of the restricting member and bearing shown in Fig. 8.
Fig. 10 corresponds to Fig. 4 and illustrates yet another modification example of the restricting member.
Fig. 11 is a side view illustrating a second specific example of the shaft member and restricting member applicable to the speed reducer of the embodiment of the present invention.
Fig. 12 is a front view of the restricting member and bearing shown in Fig. 11.
Fig. 13 is a side view showing the restricting member shown in Fig. 12.
Fig. 14 is a side sectional view of a modification example of the restricting member.
Fig. 15 is a side view illustrating a third specific example of the shaft member and restricting member applicable to the speed reducer of the embodiment of the present invention.
Fig. 16 is a front elevated view of the restricting member and bearing shown in Fig. 15.
Fig. 17 is a side sectional view showing the restricting member shown in Fig. 15.
Fig. 18 corresponds to Fig. 16 and illustrates a modification example of the restricting member.
Fig. 19 is a side sectional view showing the restricting member shown in Fig. 18.

### DESCRIPTION OF THE PREFERRED EMBODIMENTS

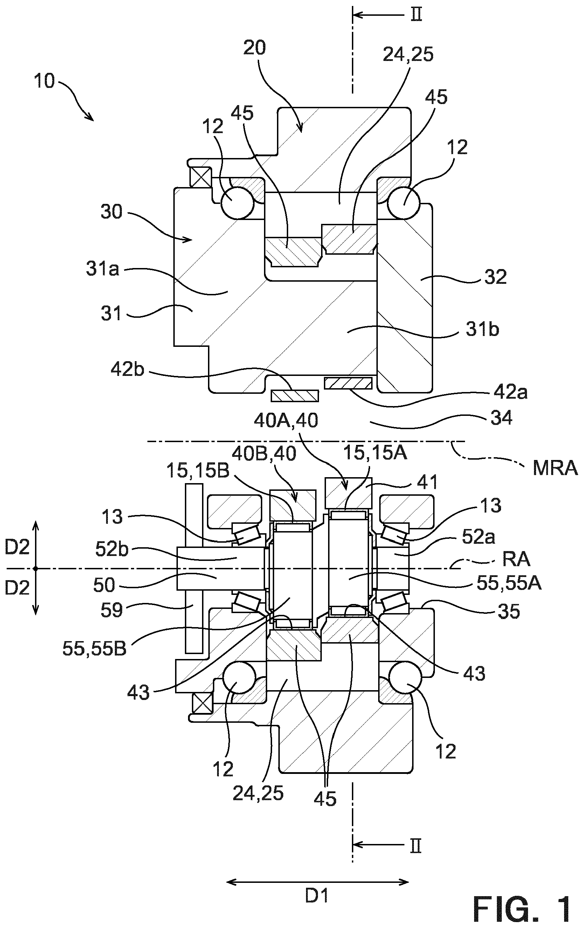

One embodiment of the invention will be hereinafter described with reference to the attached drawings. Figs. 1 to 19 are drawings for describing one embodiment of the invention. The design and components shown in some of the drawings may not be shown in other drawings. The respective drawings may employ different scales and aspect ratios.

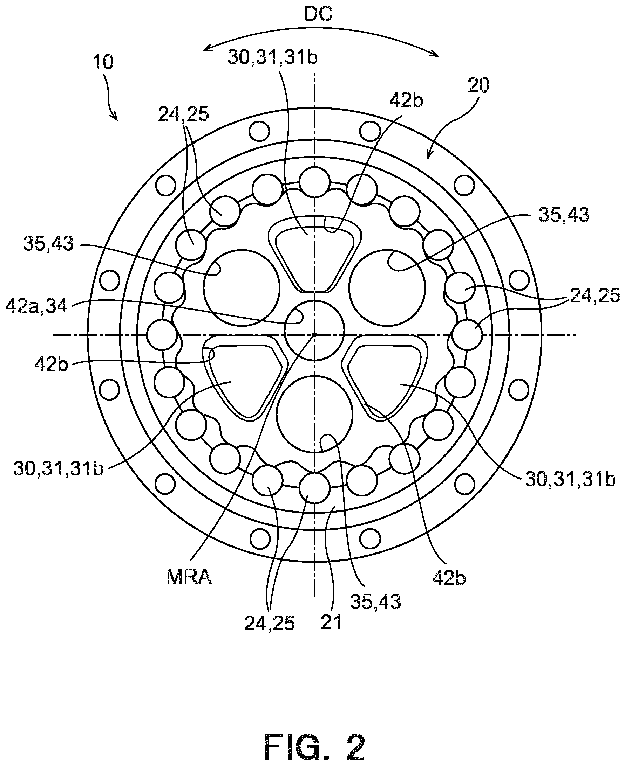

The following now describes the overall configuration of a speed reducer 10 with reference to Figs. 1 and 2. The speed reducer 10 receives rotation input by a drive unit such as a motor. The speed reducer 10 reduces the input rotation and outputs the reduced rotation. The speed reducer 10 is mainly constituted by a casing 20, a carrier 30, an external gear 40, and a shaft member 50. The casing 20 houses the carrier 30 therein. Between the casing 20 and the carrier 30, a main bearing 12 is provided. The casing 20 and carrier 30 are rotatable relative to each other about a main axis of rotation MRA. The speed reducer 10 reduces the input rotation and outputs the reduced rotation in the form of the relative rotation of the casing 20 and carrier 30. In the following description, an axial direction D1 refers to the direction parallel to the main axis of rotation MRA. The carrier 30 rotatably holds the shaft member 50. The axis of rotation RA of the shaft member 50 is parallel to the axial direction D1. The drive unit inputs rotation to the shaft member 50. The shaft member 50 has an eccentric member 55. The center of the eccentric member 55 is shifter from the center of rotation of the shaft member 50. The external gear 40 is penetrated by the shaft member 50. The external gear 40 is located on the eccentric member 55. As the shaft member 50 rotates, the external gear 40 eccentrically oscillates. The external gear 40 has external teeth 45 meshing with internal teeth 25 formed by the inner surface of the casing 20. The number of the internal teeth 25 is different from the number of the external teeth 45. In response to the rotation input into the shaft member 50, the internal and external teeth 25 and 45 mesh with each other and the external gear 40 may eccentrically oscillate. Due to the difference in number between the internal teeth 25 and the external teeth 45, the external gear 40 and the carrier 30 supporting the shaft member 50 can rotate relative to the casing 20.

The following describes in detail the casing 20, carrier 30, external gear 40, and shaft member 50 in the stated order and their specific configurations shown in the drawings.

The casing 20 has the internal teeth 25. The internal teeth 25 are arranged next to each other in a circumferential direction DC that is centered around the main axis of rotation MRA. The internal teeth 25 are arranged along the circumference. In the illustrated example, the speed reducer 10 has two external gears 40A and 40B arranged next to each other in the axial direction D1. The internal teeth 25 extend in the axial direction D1 and mesh with the external teeth 45 of the two external gears 40A and 40B.

The illustrated casing 20 includes a casing body 21 substantially shaped like a circular cylinder and internal tooth pins 24 held on the inner surface of the casing body 21. The casing body 21 has a plurality of pin grooves arranged next to each other in the circumferential direction DC. The pin grooves extend in the axial direction D1 and accommodate and hold the circular cylindrical internal tooth pins 24. Each internal tooth pin 24 constitutes one internal tooth 25.

The carrier 30 is held in the casing 20 via a pair of main bearings 12. The carrier 30 is rotatable relative to the casing 20 about the main axis of rotation MRA. The illustrated carrier 30 includes a carrier base 31 and a carrier plate 32 fixedly attached to each other. The carrier base 31 and carrier plate 32 can be secured to each other using bolts or other fixtures, which are not shown. The carrier base 31 has a base plate 31a shaped like a disk and a plurality of columns 31b protruding in the axial direction D1 from the base plate 31a. The base plate 31a and columns 31b may be integrated with each other. The columns 31b may be arranged at equal intervals in the circumferential direction DC that is centered around the main axis of rotation MRA. In the specific example shown, three columns 31b are provided.

The illustrated carrier 30 has a center hole 34 and through holes 35. The center hole 34 and through holes 35 extend through the carrier base 31 and carrier plate 32. The center hole 34 is located on the main axis of rotation MRA. The carrier 30 has more than one through hole 35. The through holes 35 are arranged at equal intervals in the circumferential direction DC that is centered around the axis of rotation RA.

The shaft member 50 is rotatably held by the carrier 30. As illustrated, the shaft member 50 is inserted into each of the through holes 35 in the carrier 30. A pair of main shaft bearings 13 is disposed between the carrier 30 and the shaft member 50. Via the main shaft bearings 13, the shaft member 50 is rotatable relative to the carrier 30 about the axis of rotation RA. The axis of rotation RA is parallel to the axial direction D1. The speed reducer 10 illustrated includes a plurality of shaft members 50 respectively inserted into the through holes 35. The shaft members 50 are arranged at equal intervals in the circumferential direction DC that is centered around the axis of rotation MRA. In the specific example shown, three through holes 35 are formed. In the example shown, three shaft members 50 are provided.

The shaft members 50 illustrated each have a shaft body 51 and a pair of eccentric members 55 provided on the shaft body 51. The eccentric members 55 are shaped like a circular column. The eccentric members 55 have a larger diameter than the shaft body 51. The center of the eccentric members 55 is shifted from the axis of rotation RA about which the shaft member 50 rotates. The pair of eccentric members 55 is constituted by a first eccentric member 55A and a second eccentric member 55B. The centers of the first and second eccentric members 55A and 55B are shifted from the axis of rotation RA in opposite directions by the same amount. In other words, in the cross section orthogonal to the axial direction D1, the centers of the first and second eccentric members 55A and 55B are point-symmetrical with respect to a point on the axis of rotation RA.

The shaft body 51 has a first bearing support 52a that is inserted into the carrier plate 32 and a second bearing support 52b that is inserted into the carrier base 31. The bearing supports 52a and 52b support the main shaft bearings 13. The eccentric members 55A and 55B are located between the bearing supports 52a and 52b in the axial direction D1. The shaft member 50 illustrated further has an input gear 59 fixedly attached to the shaft body 51. In the illustrated example, the first bearing support 52a, first eccentric member 55A, second eccentric member 55B, second bearing support 52b, and input gear 59 are arranged in this order in the axial direction D1.

The illustrated speed reducer 10 has the external gear 40a, which is constituted by a first external gear 40A and a second external gear 40B. The first external gear 40A is located on the first eccentric members 55A of the shaft members 50. The second external gear 40B is located on the second eccentric members 55B of the shaft members 50. The first and second external gears 40A and 40B are located, in the axial direction D1, between the base plate 31a of the carrier base 31 and the carrier plate 32.

The illustrated external gear 40 has a disk-shaped central plate 41 and external teeth 45 arranged around the periphery of the central plate 41. The central plate 41 has a center hole 42a and column pass holes 42b. The center hole 42a is located on the main axis of rotation MRA. The center hole 42a faces the center hole 34 in the axial direction D1. In the illustrated example, the column pass holes 42b are arranged at equal intervals in the circumferential direction DC that is centered around the center hole 42a. The columns 31b of the carrier 30 penetrate the column pass holes 42b. In the specific example shown, three column pass holes 43 are formed.

The central plate 41 further has holes 43. In the illustrated example, the three holes 43 are arranged at equal intervals in the circumferential direction DC that is centered around the center hole 42a. The holes 43 receive the eccentric members 55. Between each eccentric member 55 and the external gear 40, a bearing 15 is provided. The first external gear 40A is supported on the first eccentric member 55A of each shaft member 50 via a first bearing 15A. The second external gear 40B is supported on the second eccentric member 55B of each shaft member 50 via a second bearing 15B.

The external gear 40 is supported by the three eccentric members 55. The eccentric members 55 of the three shaft members 50 are in phase. Therefore, as the three shaft members 50 rotate, the external gear 40 eccentrically oscillates. In other words, as the three shaft members 50 rotate, the external gear 40 translates along a circumferential path that is centered on the main axis of rotation MRA. The first and second external gears 40A and 40B are shifted by half a phase.

Having the above-described configuration, the speed reducer 10 receives rotation input by a drive unit such as a motor. For example, the output gear of the drive unit is located on the main axis of rotation MRA and meshes with the input gears 59 of the three shaft members 50. As the output gear rotates, the shaft members 50 rotate, which causes the external gear 40 to eccentrically oscillate. Here, the external teeth 45 of the external gear 40 mesh with the internal teeth 25 of the casing 20. Due to the difference in number between the external teeth 45 and the internal teeth 25, the carrier 30, which supports the external gear 40 via the shaft members 50, and the casing 20 rotate relative to each other around the main axis of rotation MRA. When the casing 20 is stationary, the rotation of the carrier 30 is output. When the carrier 30 is stationary, the rotation of the casing 20 is output.

As mentioned in the Conventional Art section, the bearing interposed between the external gear and the shaft member can move in the axial direction D1. The bearing may be restricted from moving by a washer placed on the shaft body of the shaft member. The center of the eccentric member is off the axis of rotation of the shaft member. Therefore, the distance in the radial direction D2 from the axis of rotation RA to the bearing varies among different positions in the circumferential direction on the bearing. A large-diameter washer having a constant radius may be provided on the shaft body. The washer can thus have an annular region in contact with the bearing located on the eccentric member from the axial direction D1. In this way, the bearing can be reliably restricted from moving in the axial direction.

The shift of the center of the eccentric member is determined based on factors including the reduction ratio. In other words, the shift of the center of the eccentric member depends on the design of the speed reducer. When the center of the eccentric member is greatly shifted, the washer may extend beyond a portion of the bearing in the radial direction. This is because the distance between that portion of the bearing and the axis of rotation RA is short. In this case, the washer may touch the eccentrically oscillating external gear or other surrounding components than the external gear. If the washer touches the surrounding components including the external gear, this may obstruct the operation of the speed reducer and result in damaging the speed reducer. If a small-diameter washer is used, on the other hand, such a washer cannot provide an annular region that can establish a contact with the bearing from the axial direction D1 and thus cannot reliably restrict the movement of the bearing on the eccentric member.

To deal with the above problems, the present embodiment employs a restricting member 60, which is provided on the shaft members 50, as will be described below. The restricting member 60 can reliably restrict the bearing from moving on the eccentric member. Hereinafter, the restricting member 60 will be described with reference to some specific examples. Although various specific examples are described, their corresponding constituents, elements and components are denoted by the same reference signs and are not described redundantly.

The restricting member 60 described below is applicable to the speed reducer 10 described above with reference to the specific examples shown in Figs. 1 and 2. Note that, however, the restricting member 60 can be also applicable to other cases than the specific examples shown in Figs. 1 and 2. The specific configuration of the speed reducer 10 shown in the drawings referred to in the following may not be exactly the same as that of the specific example shown in Figs. 1 and 2, but is considered to be an example of configurations that can be changed as needed.

In the following description, the first and second eccentric members 55A and 55B may be referred to as "the eccentric member 55" without being distinguished from each other. In this case, the description regarding "the eccentric member 55" is applicable to either the first or second eccentric member 55A or 55B. Similarly, the description regarding "the external gear 40" is applicable to either the first or second external gear 40A or 40B. The description regarding "the bearing 15" is applicable to either the first or second bearing 15A or 15B. In the following examples, the restricting member 60 of the speed reducer 10 may include a first restricting member 60A and a second restricting member 60B. The first and second restricting members 60A and 60B may be referred to as "the restricting member 60" without being distinguished from each other. In this case, the description regarding "the restricting member 60" is applicable to either the first or second restricting member 60A or 60B.

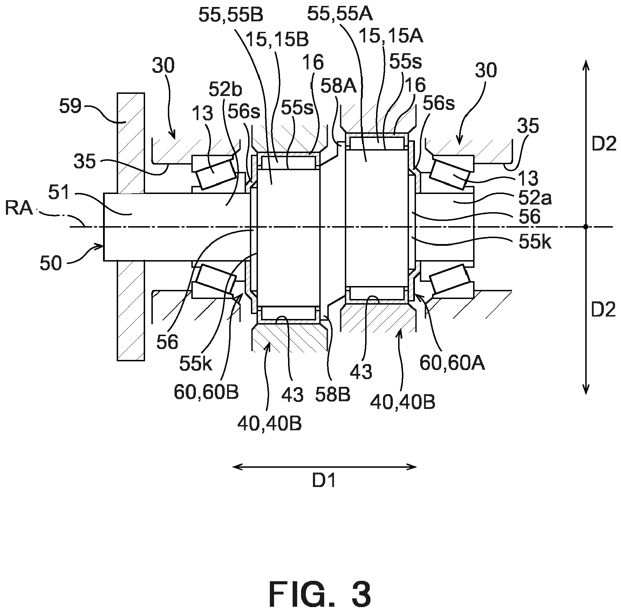

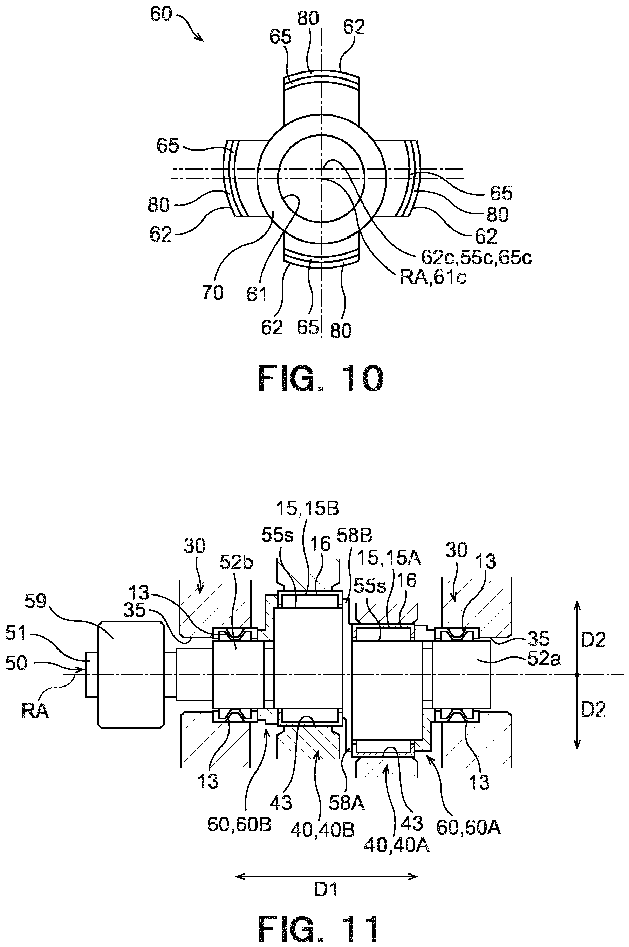

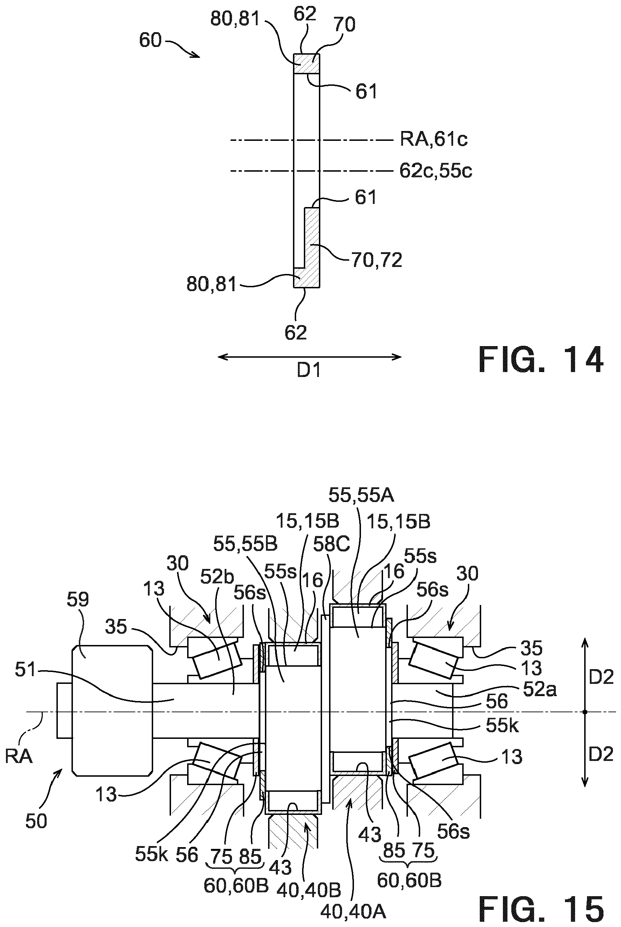

Figs. 3 to 10 show a first specific example and its modification examples. Figs. 11 to 14 show a second specific example and its modification examples, and Figs. 15 to 17 show a third specific example and its modification examples.

The speed reducer 10 includes the external gear 40, the shaft member 50 having the eccentric member 55 for causing the external gear 40 to eccentrically oscillate, and the bearing 15 disposed between the external gear 40 and the shaft member 50. The shaft member 50 further has the restricting member 60 that can establish a contact with the bearing 15 from the axial direction D1. The restricting member 60 can establish a contact with the bearing 15 from one side in the axial direction D1, thereby restricting the bearing 15 from moving to the one side in the axial direction D1.

In relation to a certain shaft member 50, a first side in the axial direction D1 refers to the end of the shaft member 50 that is distant from the input gear 59 and close to the first bearing support 52a in the axial direction D1. In relation to a certain one shaft member 50, a second side in the axial direction D1 refers to the end of the shaft member 50 that is distant from the first bearing support 52a and close to the input gear 59 in the axial direction D1. In Figs. 2 and 3, the right side corresponds to the first side in the axial direction D1. The radial direction D2 refers to the direction orthogonal to the axis of rotation RA of the shaft member 50. The terms such as "inner" or "inside" are used to describe something is closer in the radial direction D2 to the axis of rotation RA, and the terms such as "outer" or "outside" are used to describe something is more distant in the radial direction D2 from the axis of rotation RA.

According to the examples shown in Figs. 3, 8, 11 and 15, the restricting member 60 of the speed reducer 10 includes the first and second restricting members 60A and 60B. The first restricting member 60A is in contact with the first bearing 15A located on the first eccentric member 55A from the first side in the axial direction D1. The first restricting member 60A restricts the first bearing 15A from moving toward the first side in the axial direction D1. The second restricting member 60B is in contact with the second bearing 15B located on the second eccentric member 55B from the second side in the axial direction D1. The second restricting member 60B restricts the second bearing 15B from moving toward the second side in the axial direction D1.

In the illustrated example, the shaft member 50 further has a first flange 58A and a second flange 58B. The first flange 58A abuts the first eccentric member 55A from the second side in the axial direction D1. The first flange 58A extends outward in the radial direction D2 beyond the first eccentric member 55A. The first flange 58A and first eccentric member 55A may be concentrically arranged. The first flange 58A may extend beyond the outer circumferential surface 55s of the first eccentric member 55A by a constant length. The first flange 58A is in contact with the first bearing 15A located on the first eccentric member 55A from the second side in the axial direction D1. The first flange 58A restricts the first bearing 15A from moving toward the second side in the axial direction D1. The first bearing 15A on the first eccentric member 55A is sandwiched between the first flange 58A and the first restricting member 60A in the axial direction D1, so that the first flange 58A and first restricting member 60A are in contact with the first bearing 15A. This can result in restricting the first bearing 15A from moving in the axial direction D1.

The second flange 58B abuts the second eccentric member 55B from the first side in the axial direction D1. The second flange 58B extends outward in the radial direction D2 beyond the second eccentric member 55B. The second flange 58B and second eccentric member 55B may be concentrically arranged. The second flange 58B may extend beyond the outer circumferential surface 55s of the second eccentric member 55B by a constant length. The second flange 58B is in contact with the second bearing 15B located on the second eccentric member 55B from the first side in the axial direction D1. The second flange 58B restricts the second bearing 15B from moving toward the first side in the axial direction D1. The second bearing 15B on the second eccentric member 55B is sandwiched between the second flange 58B and the second restricting member 60B in the axial direction D1, so that the second flange 58B and the second restricting member 60B are in contact with the second bearing 15B. This can result in restricting the second bearing 15B from moving in the axial direction D1.

The first flange 58A and first eccentric member 55A may be made from the same material seamlessly by cutting. Similarly, the second flange 58B and the second eccentric member 55B may be made from the same material seamlessly by cutting. Being concentric, the eccentric member 55 and flange can be formed continuously without requiring that the turning workpiece be held differently during cutting. This is desirable from the perspectives of processing accuracy, work time, delivery time, and manufacturing cost. In the illustrated shaft member 50, the shaft body 51, first eccentric member 55A, second eccentric member 55B, first flange 58A, and second flange 58B are formed from the same material seamlessly by cutting using a lathe or similar tool. The illustrated shaft member 50 further has the input gear 59 that constitutes an integral part. The input gear 59 is separately manufactured and fixedly attached to the shaft body 51.

According to the examples shown in Figs. 3, 8, 11 and 15, the first restricting member 60A is situated on the shaft body 51. The first restricting member 60A is sandwiched between the first eccentric member 55A and the first bearing support 52a in the axial direction D1. On the first bearing support 52a, the main shaft bearing 13 is provided. The first restricting member 60A is restricted by the main shaft bearing 13 from moving away from the first eccentric member 55A in the axial direction D1. Likewise, the second restricting member 60B is situated on the shaft body 51. The second restricting member 60B is sandwiched between the second eccentric member 55B and the second bearing support 52b in the axial direction D1. On the second bearing support 52b, the main shaft bearing 13 is provided. The second restricting member 60B is restricted by the main shaft bearing 13 from moving away from the second eccentric member 55B in the axial direction D1. The main shaft bearing 13 on the first bearing support 52a is restricted by the carrier plate 32 from moving toward the first side in the axial direction D1. The main shaft bearing 13 on the second bearing support 52b is restricted by the carrier base 31 from moving toward the second side in the axial direction D1.

As shown in Figs. 3 through 17, the restricting member 60 is annularly shaped. This feature is common to all of the specific examples. The annular restricting member 60 has an inner circumferential edge 61 and an outer edge 62. The restricting member 60 has an inner annular portion 70 forming the inner circumferential edge 61. The inner annular portion 70 is an annular portion extending annularly along the inner circumferential edge 61. The shaft member 50 passes through the inner annular portion 70, and the restricting member 60 is held on the shaft member 50. As the inner circumferential edge 61 is in contact with the shaft member 50, the restricting member 60 is restricted from moving in the radial direction D2 relative to the shaft member 50.

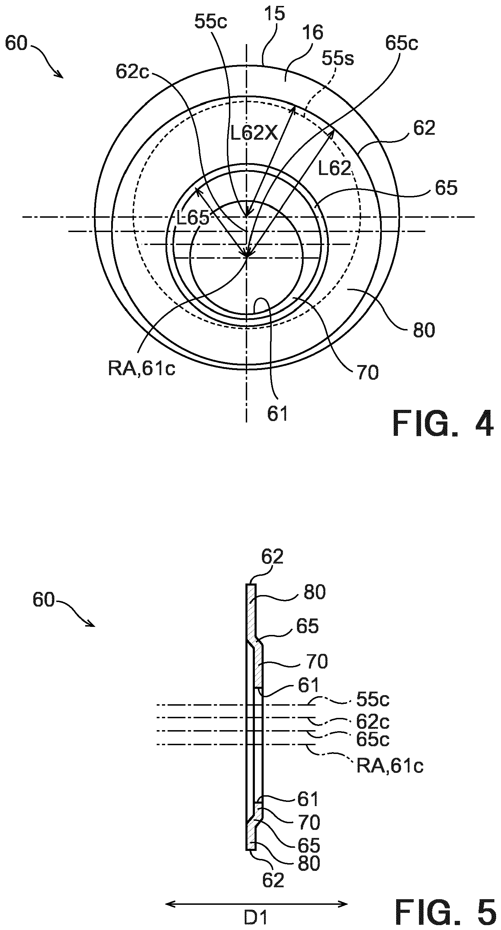

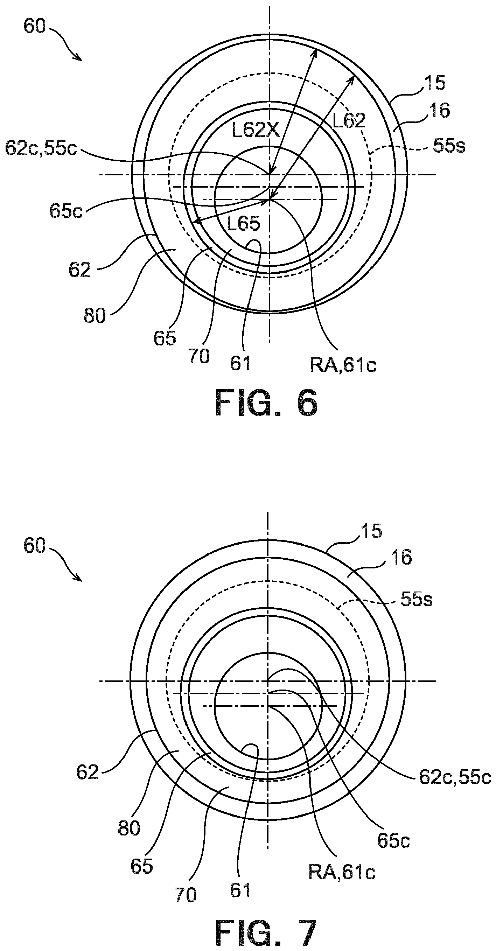

The restricting member 60 has an outer portion 80 defining the outer edge 62. The outer portion 80 of the restricting member 60 extends outward in the radial direction D2 beyond the eccentric member 55. The outer portion 80 faces the bearing 15 in the axial direction D1. The outer portion 80 is an annular portion extending annularly along the outer edge 62. The outer portion 80 of the restricting member 60 can establish a contact with the bearing 15 in the axial direction D1. For example, as shown in Figs. 4 and 6, the distance L62 from the center 61c of the inner circumferential edge 61 to the outer edge 62 varies among different positions on the outer edge 62. In other words, the center of the outer edge 62 is shifted from the center 61c of the inner circumferential edge 61. Note that the expression "the center of a component" indicates the center of gravity of the shape defined by the outline of the component when seen in the axial direction D1, in other words, when projected onto a plane orthogonal to the axial direction D1. Accordingly, the center 61c of the inner circumferential edge 61 indicates the center of gravity of the shape delineated by the inner circumferential edge 61. For example, when the inner circumferential edge 61 delineates a circle when viewed in the axial direction D1, the center 61c indicates the center of the circle. The outer edge 62 may extend along an annulus the center of which is shifted from the center 61c of the inner circumferential edge 61. According to the examples shown in Figs. 4 and 6, the inner circumferential edge 61 and outer edge 62 both define a circle when viewed in the axial direction D1. The centers of the circles delineated by the inner circumferential edge 61 and outer edge 62 do not coincide with each other.

As described above, the restricting member 60 has the inner annular portion 70 and outer portion 80. The inner annular portion 70 has the inner circumferential edge 61 located on the shaft member 50, and the outer portion 80 has the outer edge 62 with the distance from the center 61c of the inner circumferential edge 61 to the outer edge 62 varying among different positions on the outer edge 62. The outer portion 80 restricts the bearing 15 from moving in the axial direction D1. The distance between the center 61c of the inner circumferential edge 61 and the outer circumferential surface 55s of the eccentric member 55 also varies among different positions on the outer circumferential surface 55s. Based on the varying distances between the center 61c of the inner circumferential edge 61 and the eccentric member 55, the distances from the center 61c of the inner circumferential edge 61 to the different positions on the outer edge 62 are adjusted. In this way, when seen in the axial direction D1, the outer edge 62 can be placed outside the outer circumferential surface 55s in the radial direction D2. Since the distances between the center 61c of the inner circumferential edge 61 and the different positions on the outer edge 62 are adjusted, the outer edge 62 can be entirely positioned on the bearing 15 when seen in the axial direction D1. Additionally, the outer edge 62 is not positioned outside the bearing 15 in the radial direction D2. The above-described arrangements can effectively prevent the restricting member 60 from touching the parts surrounding the eccentric member 55 and bearing 15, such as the external gear 40, and also from damaging the surrounding parts. Accordingly, the restricting member 60 can reliably restrict the bearing 15, which is positioned between the eccentric member 55 and the external gear 40, from moving in the axial direction D1.

The following now describes a first specific example of the speed reducer 10 having the restricting member 60 and modification examples mainly with reference to Figs. 3 to 10.

As described above, the restricting member 60 has the inner annular portion 70 and outer portion 80. The inner annular portion 70 has the inner circumferential edge 61, and the outer portion 80 has the outer edge 62 that has the center shifted from the center 61c of the inner circumferential edge 61. According to the example shown, the inner annular portion 70 and outer portion 80 are both shaped like a plate. According to the first specific example, the restricting member 60 further has a step connecting portion 65 connecting the inner annular portion 70 and the outer portion 80. The step connecting portion 65 may be offset in the axial direction D1 to connect the outer portion 80 and inner annular portion 70. As shown in Fig. 4, the distance L65 from the center 61c of the inner circumferential edge 61 to the step connecting portion 65 varies among different positions on the step connecting portion 65. In other words, the center of the step connecting portion 65 is shifted from the center 61c of the inner circumferential edge 61. As shown in Fig. 4, the inner circumferential edge 61 and step connecting portion 65 both define a circle when viewed in the axial direction D1. The centers of the circles delineated by the inner circumferential edge 61 and step connecting portion 65 do not coincide with each other.

As shown in Fig. 3, the eccentric member 55 has a side surface 55k facing the restricting member 60. The side surface 55k of the eccentric member 55 has a step 56s. The step 56s linearly extends. The step 56s extends along an annulus having the center shifted from the center 61c of the inner circumferential edge 61. As shown, the side surface 55k of the eccentric member 55, which faces the restricting member 60, has a protrusion 56 protruding in the axial direction D1. The protrusion 56 is shaped like a low flat protrusion. The step 56s is formed by the circumferential edge of the protrusion 56. The protrusion 56 and step 56s may be made from the same material as the eccentric member 55 seamlessly by cutting. In the illustrated example, the first eccentric member 55A has a protrusion 56 and a step 56s on a side surface 55k facing the first side in the axial direction D1. The second eccentric member 55B has a protrusion 56 and a step 56s on a side surface 55k facing the second side in the axial direction D1.

The restricting member 60 is penetrated by the shaft member 50, and the inner circumferential edge 61 is located on the shaft member 50. Therefore, it may be possible that, when acted upon by an external force, the restricting member 60 may attempt to rotate while being located on the shaft member 50. In this case, the restricting member 60 may rotate about an axis that passes through the center 61c of the inner circumferential edge 61 and extends in the axial direction D1. As shown in Fig. 3, on the other hand, the step 56s of the eccentric member 55 faces in the axial direction D1 the step connecting portion 65 of the restricting member 60. The step 56s of the eccentric member 55 is shaped like an annulus the center of which is shifted from the center 61c of the inner circumferential edge 61. This allows the step 56s and the step connecting portion 65 to come into contact with each other, thereby restricting the restricting member 60 and the shaft member 50 from rotating relative to each other. In other words, the restricting member 60, which has the outer edge 62 with the distance L42 from the center 61c of the inner circumferential edge 61 to the outer edge 62 varying among different positions on the outer edge 62, is restricted from rotating relative to the shaft member 50. If the restricting member 60 rotates while being located on the shaft member 50, the outer edge 62 for which the distance L42 from the center 61c of the inner circumferential edge 61 to the outer edge 62 varies among different positions on the outer edge 62 may be unintentionally positioned significantly outside the outer circumferential surface 55s of the eccentric member 55 in the radial direction D2. The first specific example can effectively prevent this from happening. The above-described arrangements can effectively prevent the restricting member 60 from touching the parts surrounding the eccentric member 55 and bearing 15, such as the external gear 40, and also from damaging the surrounding parts. Accordingly, the restricting member 60 can reliably restrict the bearing 15 from moving in the axial direction D1.

According to the example shown in Fig. 4, the restricting member 60 may face only a portion of the bearing 15 in the axial direction D1. More specifically, the bearing 15 may be at least partially exposed as not being covered by the restricting member 60, when seen in the axial direction D1. This arrangement allows the lubricating oil contained in the speed reducer 10 to be smoothly supplied to the bearing 15.

As shown in Fig. 4, the distance L62X between the center 55c of the eccentric member 55 and the outer edge 62 may vary among different positions on the outer edge 62. According to this example, the bearing 15 may be at least partially exposed as not being covered by the restricting member 60, when seen in the axial direction D1. This arrangement allows the lubricating oil contained in the speed reducer 10 to be smoothly supplied to the bearing 15.

The bearing 15 usually has a rolling element located on the outer circumferential surface 55s of the eccentric member 55 and a retainer 16 holding the rolling element on the eccentric member 55. It is the retainer 16 that can establish a contact with the restricting member 60 in the axial direction D1. While being held on the eccentric member 55, the retainer 16 can rotate about the center 55c of the eccentric member 55.

The outer edge 62 may be shaped like an annulus. According to the example shown in Fig. 4, the center of the annular outer edge 62 is shifted from the center 55c of the eccentric member 55. Accordingly, the distance L62X between the center 55c of the eccentric member 55 and the outer edge 62 may vary among different positions on the outer edge 62. The varying distances L62X can be achieved in any other ways. As shown in Fig. 6, the outer edge 62 may have any other shapes than a circle. According to the example shown in Fig. 6, the outer edge 62 can have an elliptic shape, for example. According to the example shown in Fig. 6, the center 62c of the outer edge 62 coincides with the center 55c of the eccentric member 55 and also with the center of the bearing 15. Nevertheless, the non-circular shape of the outer edge 62 allows the bearing 15 to be at least partially exposed as not being covered by the restricting member 60 when seen in the axial direction D1. This arrangement allows the lubricating oil contained in the speed reducer 10 to be smoothly supplied to the bearing 15.

The portion of the bearing 15 that is exposed beyond the restricting member 60 may be annular. According to the example shown in Fig. 4, the outer edge 62 of the restricting member 60 is entirely positioned inside the outer edge of the bearing 15 in the radial direction D2. Therefore, the annular region of the bearing 15 including the outer edge is exposed beyond the restricting member 60 when seen in the axial direction D1. This example arrangement enables the lubricating oil to be smoothly fed to the bearing 15 and effectively prevents the outer edge 62 of the restricting member 60 from touching the parts surrounding the eccentric member 55 and bearing 15, such as the external gear 40.

Further referring to the example shown in Fig. 4 and other drawings, the outer edge 62 of the restricting member 60 is entirely located outside the inner edge of the bearing 15 and the outer circumferential surface 55s of the eccentric member 55 in the radial direction D2. Specifically, in the example shown in Fig. 4, the bearing 15 has the radially (D2) inner annular region facing in the axial direction D1 the restricting member 60 and also has the radially (D2) outer annular region exposed in the axial direction D1 to the lubricating oil. Therefore, while the restricting member 60 can effectively avoid touching the surrounding parts, the restricting member 60 can still reliably restrict the bearing 15 from moving in the axial direction D1. In addition, the lubricating oil contained in the speed reducer 10 can be smoothly supplied to the bearing 15.

As shown in Fig. 7, the center of the circular outer edge 62 may coincide with the center of the eccentric member 55. According to this example, the region of the bearing 15 that is exposed beyond the restricting member 60 when seen in the axial direction D1 is highly likely to have a certain width or to be rotationally symmetrical. According to this example, the retainer 16 can stably rotate while being held on the eccentric member 55. This facilitates the supply of the lubricating oil to the bearing 15 and also allows the speed reducer 10 to stably operate.

The above-described relation between the outer edge 62 of the restricting member 60 and the bearing 15 can be applicable not only to the first specific example, but also to second and third specific examples, which will be described below with reference to Figs. 11 to 17.

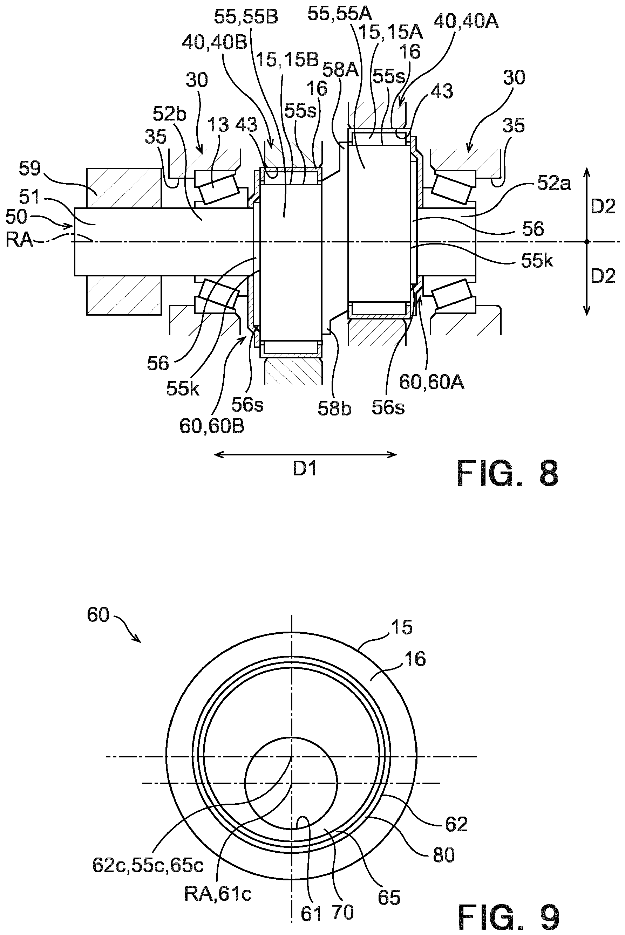

According to the example shown in Figs. 3 and 4, the center of the annular step 56s is shifted from the center 55c of the eccentric member 55. The present embodiment is not limited to this example. Alternatively, as shown in Fig. 8, the center of the annular step 56s and protrusion 56 may coincide with the center of the eccentric member 55. According to this example, all of the features of the eccentric member 55, including the outer circumferential surface 55s, step 56s, and protrusion 56, can be formed continuously without requiring that the turning workpiece be held differently during cutting. This is desirable from the perspectives of processing accuracy, work time, delivery time, and manufacturing cost.

Fig. 9 is a plan view showing the restricting member 60 shown in Fig. 8. As shown in Fig. 9, the center of the step connecting portion 65 may coincide with the center of the outer edge 62. Specifically, in the example shown in Fig. 9, the center 65c of the step connecting portion 65 coincides with the center 62c of the outer edge 62 when seen in the axial direction D1. According to this example, the distance between the step connecting portion 65 and the outer edge 62, i.e., the width of the annular outer portion 80, can be constant along the circumferential direction centered on the axis of rotation RA. This can produce a certain level of rigidity in the regions of the outer portion 80 arranged next to each other in the circumferential direction. Accordingly, the restricting member 60 can reliably restrict the bearing 15 from moving in the axial direction D1. Additionally, the outer portion 80 can be saved from getting damaged.

According to the illustrated example, the center 61c of the inner circumferential edge 61 is positioned on the axis of rotation RA of the shaft member 50. In this way, a portion of the shaft body 51 that supports the inner circumferential edge 61 and inner annular portion 70 of the restricting member 60 can be formed continuously after and before the first and second bearing supports 52a and 52b without requiring that the turning workpiece be held differently during cutting. This is desirable from the perspectives of processing accuracy, work time, delivery time, and manufacturing cost. This can be applicable not only to the first specific example, but also to the second and third specific examples, which will be described below with reference to Figs. 11 to 15.

Fig. 5 is a sectional view showing the restricting member 60 shown in Figs. 3 and 4. As shown in Fig. 5, the inner annular portion 70 and outer portion 80 are at least partially located in the same region defined in the axial direction D1. Specifically, at least a portion of the inner annular portion 70 overlaps at least a portion of the outer portion 80 in a region defined in the axial direction D1. According to this example, the restricting member 60, which is restricted from rotating relative to the shaft member 50, can have a reduced thickness in the axial direction D1. This can reduce the size of the speed reducer 10.

The outer edge 62 and outer portion 80 may not be shaped like an annulus. The outer edge 62 and outer portion 80 may be shaped like an ellipse. The outer edge 62 and outer portion 80 may be shaped like a hexagon, a rectangle, or other polygons. The outer edge 62 and outer portion 80 do not need to be shaped like an annulus. As shown in Fig. 10, the outer edge 62 and outer portion 80 may extend along only part of a circle. The outer edge 62 and outer portion 80 may extend along only part of an ellipse. The outer edge 62 and outer portion 80 may extend along only part of a polygon. Likewise, the step connecting portion 65 does not need to be shaped like an annulus. As shown in Fig. 10, the step connecting portion 65 may extend along only part of a circle. In the above examples, the restricting member 60 can reliably restrict the bearing 15, which is positioned between the eccentric member 55 and the external gear 40, from moving in the axial direction D1. In addition, the restricting member 60 can have a smaller size and a lighter weight.

The inner annular portion 70 and outer portion 80 are integrated together. Here, the expression "integrated together" means that the inner annular portion 70 and outer portion 80 are fixedly attached together such that they are not allowed to move relative to each other. The inner annular portion 70 and outer portion 80 may be shaped seamlessly and integrally from a single source material. Alternatively, the inner annular portion 70 and outer portion 80 may be separately manufactured and welded together or joined via bolts or other joints. As the inner annular portion 70 and outer portion 80 are integrated together, the restricting member 60 is less likely to disassemble or get damaged in any other way while the shaft member 50 is rotating at high speeds.

In the first specific example, the restricting member 60 may be manufactured by performing press work on a metal plate. The press work can fabricate the seamless three-dimensional restricting member 60 from a single source material. By employing the press work, the inner circumferential edge 61 and outer edge 62 of the restricting member 60 can be shaped variously.

According to the first specific example described above, the restricting member 60 has the step connecting portion 65 connecting the inner annular portion 70 and outer portion 80. The eccentric member 55 has the annular step 56s on the side surface 55k thereof facing the restricting member 60. The center of the step 56s is shifted from the center 61c of the inner circumferential edge 61. The step 56s and step connecting portion 65 come into contact with each other, thereby restricting the restricting member 60 and shaft member 50 from rotating relative to each other. As restricted from rotating as described above, the restricting member 60 can more reliably avoid touching the parts surrounding the eccentric member 55 and bearing 15, such as the external gear 40, thereby reliably restricting the bearing 15 from moving in the axial direction D1.

Next, with reference to Figs. 11 to 14, a description is given of the second specific example and modification examples.

The restricting member 60 has the inner annular portion 70 and outer portion 80. The inner annular portion 70 has the inner circumferential edge 61 located on the shaft member 50, and the outer portion 80 has the outer edge 62 with the distance from the center 61c of the inner circumferential edge 61 to the outer edge 62 varying among different positions on the outer edge 62. The outer portion 80 establishes a contact with the bearing 15 from the axial direction D1, which can restrict the bearing 15 from moving in the axial direction D1. According to the second specific example, the outer portion 80 has an outer tube 81.

The outer tube 81 is located on the outer circumferential surface 55s of the eccentric member 55. The outer tube 81 is open on both sides in the axial direction D1. The outer tube 81 has a length in the axial direction D1. According to the second specific example, the bearing 15 and outer tube 81 are located on the outer circumferential surface 55s of the eccentric member 55. The outer tube 81 is located on a portion of the outer circumferential surface 55s in the axial direction D1.

According to the second specific example, the center of the outer circumferential surface 55s of the eccentric member 55 is shifted from the center 61c of the inner circumferential edge 61 that is located on the shaft member 50. This means that the distance from the center 61c of the inner circumferential edge 61 to the outer tube 81 varies among different portions of the outer tube 81. The center of the inner circumferential edge 61 is shifted from the center of the outer tube 81. Therefore, the restricting member 60, which has the inner circumferential edge 61 located on the shaft member 50 and the outer tube 81 located on the outer circumferential surface 55s of the eccentric member 55, is restricted from rotating relative to the shaft member 50. In other words, the restricting member 60, which has the outer edge 62 with the distance L62 from the center 61c of the inner circumferential edge 61 to the outer edge 62 varying among different positions on the outer edge 62, is restricted from rotating relative to the shaft member 50. If the restricting member 60 rotates while being located on the shaft member 50, the outer edge 62 for which the distance L62 from the center 61c of the inner circumferential edge 61 to the outer edge 62 varies among different positions on the outer edge 62 may be unintentionally positioned significantly outside the outer circumferential surface 55s of the eccentric member 55 in the radial direction D2. The second specific example can effectively prevent this from happening. The above-described arrangements can effectively prevent the restricting member 60 from touching the parts surrounding the eccentric member 55 and bearing 15, such as the external gear 40, and also from damaging the surrounding parts. The restricting member 60 can reliably restrict the bearing 15 from moving in the axial direction D1.

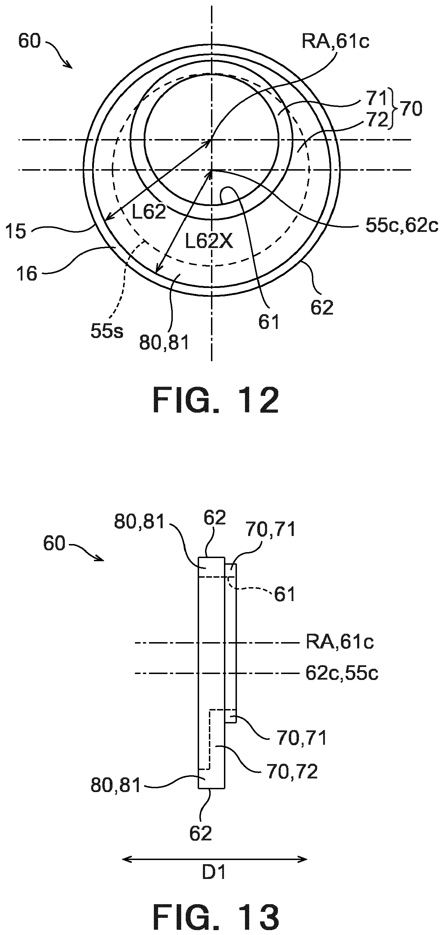

According to the example shown in Figs. 12 and 13, the outer tube 81 is shaped like a circular cylinder. The outer edge 62 is constituted by the outer circumferential surface of the circular cylinder. The center of the outer and inner circumferential surfaces of the circular cylindrical outer tube 81 coincides with the center of the eccentric member 55. As shown in Fig. 12, the annular region of the bearing 15 including the outer edge is exposed beyond the restricting member 60 when seen in the axial direction D1. The annular region of the bearing 15 including the inner edge faces the restricting member 60 in the axial direction D1. This example arrangement enables the lubricating oil to be smoothly fed to the bearing 15 and effectively prevents the outer edge 62 of the restricting member 60 from touching the parts surrounding the eccentric member 55 and bearing 15, such as the external gear 40 while still restricting the bearing 15 from moving in the axial direction D1.

In the second specific example, the center of the outer edge 62 may not need to coincide with the center of the eccentric member 55 unlike the shown arrangement. The distance L62X from the center 55c of the eccentric member 55 to the outer edge 62 may vary among different positions on the outer edge 62. In this manner, the lubricating oil can be smoothly supplied to the bearing 15.

As in the example shown in Figs. 11 to 13, the inner annular portion 70 may include an inner tube 71 located on the shaft member 50. The inner annular portion 70 shown has the inner tube 71 and a plate-shaped portion 72. The outer portion 80 is constituted only by the outer tube 81.

The inner tube 71 may be located on the shaft body 51. The inner tube 71 may be located on a portion of the bearing supports 52a and 52b of the shaft body 51. The inner tube 71 is open on both sides in the axial direction D1. The inner tube 71 has a length in the axial direction D1. The presence of the inner tube 71 can assist in more reliably restricting the restricting member 60 from rotating relative to the shaft member 50.

According to the illustrated example, the center 61c of the inner circumferential edge 61 is positioned on the axis of rotation RA of the shaft member 50. With this example arrangement, the shaft member 50 holding the restricting member 60 can be easily manufactured by means of cutting. This arrangement is not limitative. The center 61c of the inner circumferential edge 61 may be shifted in the radial direction D2 from the axis of rotation RA of the shaft member 50.

The plate-shaped portion 72 extends from the inner tube 71 in a direction non-parallel to the axial direction D1. The plate-shaped portion 72 may extend from the inner tube 71 in a direction orthogonal to the axial direction D1. The illustrated plate-shaped portion 72 is in contact with the side surface 55k of the eccentric member 55. With the plate-shaped portion 72 being in contact with the eccentric member 55, the shaft member 50 is properly positioned in the axial direction D1. The plate-shaped portion 72 can assist in more reliably restricting the restricting member 60 from rotating relative to the shaft member 50.

The restricting member 60 may be embodied without the inner tube 71, unlike the illustrated example. As in the example shown in Fig. 14, the restricting member 60 may be constituted only by the plate-shaped portion 72. The plate-shaped portion 72 extends from the outer tube 81 in a direction non-parallel to the axial direction D1, for example, in a direction orthogonal to the axial direction D1. The plate-shaped portion 72 has a through hole that is defined by the inner circumferential edge 61.

According to the second specific example, the outer tube 81 may have any other shapes than a circular cylinder. The outer tube 81 may be shaped like an oval or polygonal cylinder. Likewise, the inner tube 71 may have any other shapes than a circular cylinder. The inner tube 71 may be shaped like an oval or polygonal cylinder. With such arrangements, the restricting member 60 can be still effectively restricted from rotating relative to the shaft member 50.

According to the second specific example, the inner annular portion 70 and outer portion 80 are integrated together. As the inner annular portion 70 and outer portion 80 are integrated together, the restricting member 60 is less likely to disassemble or get damaged in any other way while the shaft member 50 is rotating at high speeds. The restricting member 60 may be fabricated using a lathe.

According to the second specific example described above, the outer portion 80 of the restricting member 60 has the outer tube 81 located on the outer circumferential surface 55s of the eccentric member 55. As the outer tube 81 is in contact with the outer circumferential surface 55s of the eccentric member 55, the restricting member 60 can be restricted from rotating relative to the shaft member 50. As restricted from rotating as described above, the restricting member 60 can more reliably avoid touching the parts surrounding the eccentric member 55 and bearing 15, such as the external gear 40, thereby reliably restricting the bearing 15 from moving in the axial direction D1.

Next, with reference to Figs. 15 to 19, a description is given of a third specific example and modification examples.

The restricting member 60 has the inner annular portion 70 and outer portion 80. The inner annular portion 70 has the inner circumferential edge 61 located on the shaft member 50, and the outer portion 80 has the outer edge 62 with the distance L62 from the center 61c of the inner circumferential edge 61 to the outer edge 62 varying among different positions on the outer edge 62. The outer portion 80 establishes a contact with the bearing 15 from the axial direction D1, which can restrict the bearing 15 from moving in the axial direction D1. According to the third specific example, the inner annular portion 70 has a first annular portion 75. The outer portion 80 includes a second annular portion 85 that is different from the inner annular portion 70.

The first annular portion 75 has a first inner circumferential edge 75a and a first outer circumferential edge 75b. The first annular portion 75 is shaped like an annular plate. The first inner circumferential edge 75a constitutes the inner circumferential edge 61 of the restricting member 60. The shaft member 50 passes through the first inner circumferential edge 75a. The first annular portion 75 is held on the shaft member 50, so that the first inner circumferential edge 75a is in contact with the shaft member 50. This results in restricting the movement of the restricting member 60 in the radial direction D2 relative to the shaft member 50.

The second annular portion 85 has a second inner circumferential edge 85a and a second outer circumferential edge 85b. The second annular portion 85 is shaped like an annular plate. The second outer circumferential edge 85b constitutes the outer edge 62 of the restricting member 60. This means that the distance L62 from the center of the first inner circumferential edge 75a to the second outer circumferential edge 85b varies among different portions of the second outer circumferential edge 85b. The shaft member 50 passes through the second inner circumferential edge 85a. The second annular portion 85 is held on the shaft member 50, so that the second inner circumferential edge 85a is in contact with the shaft member 50. This results in restricting the movement of the restricting member 60 in the radial direction D2 relative to the shaft member 50.

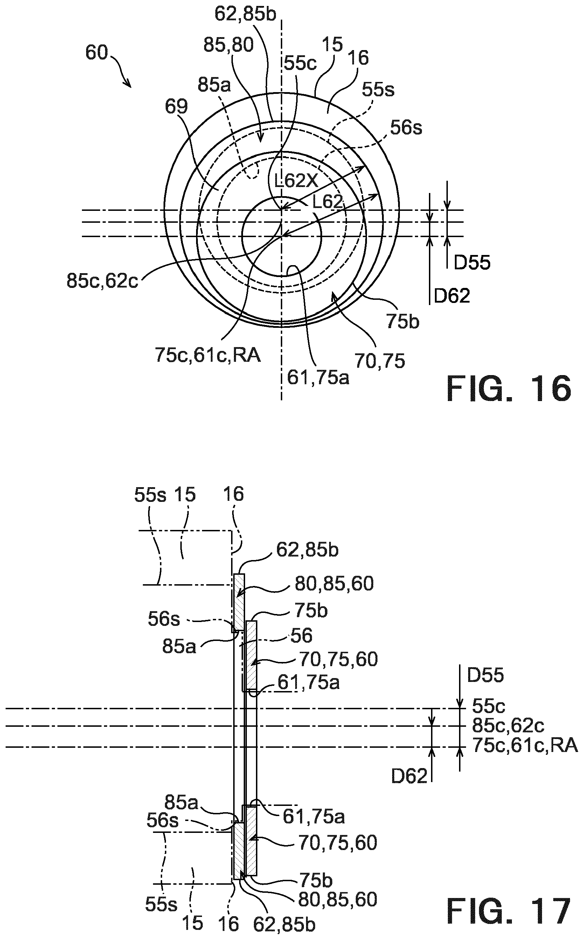

As shown in Figs. 15 to 17, the second annular portion 85 is sandwiched between the eccentric member 55 and the first annular portion 75 on the shaft member 50. The second annular portion 85 constituting the outer portion 80 faces the bearing 15 in the axial direction D1. As shown in Fig. 16, the second inner circumferential edge 85a of the second annular portion 85 and the first outer circumferential edge 75b of the first annular portion 75 delineate an annular portion 69, where the first and second annular portions 75 and 85 face each other in the axial direction D1. According to the third specific example, the center 85c of the second annular portion 85 may be shifted in the radial direction D2 from the center 75c of the first annular portion 75. In this way, the outer edge 62 can avoid being positioned significantly outside the outer circumferential surface 55s in the radial direction D2 even though the center of the eccentric member 55 is significantly shifted from the center of rotation of the shaft member 50 on which the eccentric member 55 is provided. Therefore, even if the first and second annular portions 75 and 85, which are located on the shaft member 50, rotate, the present example arrangement can effectively prevent the outer edge 62 of the restricting member 60 from touching the parts surrounding the eccentric member 55 and bearing 15, such as the external gear 40.

According to the example shown in Figs. 15 to 17, the eccentric member 55 has the protrusion 56 on the side surface 55k facing the restricting member 60. The eccentric member 55 has the step 56s, which is positioned to constitute the circumferential edge of the protrusion 56. The second annular portion 85 is held on the eccentric member 55 such that the second inner circumferential edge 85a is positioned on the step 56s. The first annular portion 75 is, on the other hand, held on the shaft body 51. The second and first annular portions 85 and 75 are located between the eccentric member 55 and the main shaft bearing 13 in the axial direction D1. The eccentric member 55 and main shaft bearing 13 restrict the second and first annular portions 85 and 75, which constitute the restricting member 60, from moving in the axial direction D1.

In the example shown in Fig. 15, an intermediate flange 58C is provided in place of the first and second flanges 58A and 58B described above. The intermediate flange 58C is in contact with the first bearing 15A from the second side in the axial direction D1, to restrict the first bearing 15A from moving toward the second side in the axial direction D1. The intermediate flange 58C is in contact with the second bearing 15B from the first side in the axial direction D1 to restrict the second bearing 15B from moving toward the first side in the axial direction D1. In the third specific example, the intermediate flange 58C may be replaced by the first and second flanges 58A and 58B described above. In the first and second specific examples described above, the first and second flanges 58A and 58B can be replaced by the intermediate flange 58C.

In the illustrated example, the inner annular portion 70 is formed only by the first annular portion 75. The first annular portion 75 is annular. Accordingly, the first inner and outer circumferential edges 75a and 75b are both circularly shaped. The region defined between the first inner and outer circumferential edges 75a and 75b has a constant width. In the illustrated example, the outer portion 80 is formed only by the second annular portion 85. The second annular portion 85 is annular. Accordingly, the second inner and outer circumferential edges 85a and 85b are both circularly shaped. The region defined between the second inner and outer circumferential edges 85a and 85b has a constant width. As shown in Fig. 16, the center of the second annular portion 85 forming the outer portion 80 is shifted from the center 75c of the first annular portion 75 forming the inner annular portion 70 and located on the shaft member 50. According to this example, the outer edge 62 can avoid being positioned significantly outside the outer circumferential surface 55s in the radial direction D2 even though the center of the eccentric member 55 is significantly shifted from the center of rotation of the shaft member 50 on which the eccentric member 55 is provided. If the second annular portion 85, which is located on the shaft member 50, rotates, the present example arrangement can more effectively prevent the outer edge 62 of the restricting member 60 from touching the parts surrounding the eccentric member 55 and bearing 15, such as the external gear 40.

As shown in Figs. 16 and 17, a shift D62 denotes how much the center of the outer edge 62 is shifted from the axis of rotation RA of the shaft member 50, and a shift D55 denotes how much the center of the eccentric member 55 is shifted from the axis of rotation RA of the shaft member 50. The shift D62 is less than the shift D55. According to this example, the outer edge 62 can avoid being positioned significantly outside the outer circumferential surface 55s in the radial direction D2 even though the center of the eccentric member 55 is significantly shifted from the center of rotation of the shaft member 50 on which the eccentric member 55 is provided.

In the example shown in Fig. 16, the bearing 15 has a partial region that is not covered by the second annular portion 85 and exposed when seen in the axial direction D1. The distance L62X from the center 55c of the eccentric member 55 to the outer edge 62 may vary among different positions on the outer edge 62. In this manner, the lubricating oil can be smoothly supplied to the bearing 15.

The shift D62 representing how much the center of the outer edge 62 is shifted from the axis of rotation RA of the shaft member 50 may be half the shift D55 representing how much the center of the eccentric member 55 is shifted from the axis of rotation RA of the shaft member 50. When seen in the axial direction D1, the center 85c of the second annular portion 85 may be located between the center 75c of the first annular portion 75 and the center 55c of the eccentric member 55. When seen in the axial direction D1, the center 85c of the second annular portion 85 may be at the middle point between the center 75c of the first annular portion 75 and the center 55c of the eccentric member 55. According to these examples, the outer edge 62 can more effectively avoid being positioned significantly outside the outer circumferential surface 55s in the radial direction D2 while the restricting member 60 can still reliably restrict the bearing 15 from moving in the axial direction D1.

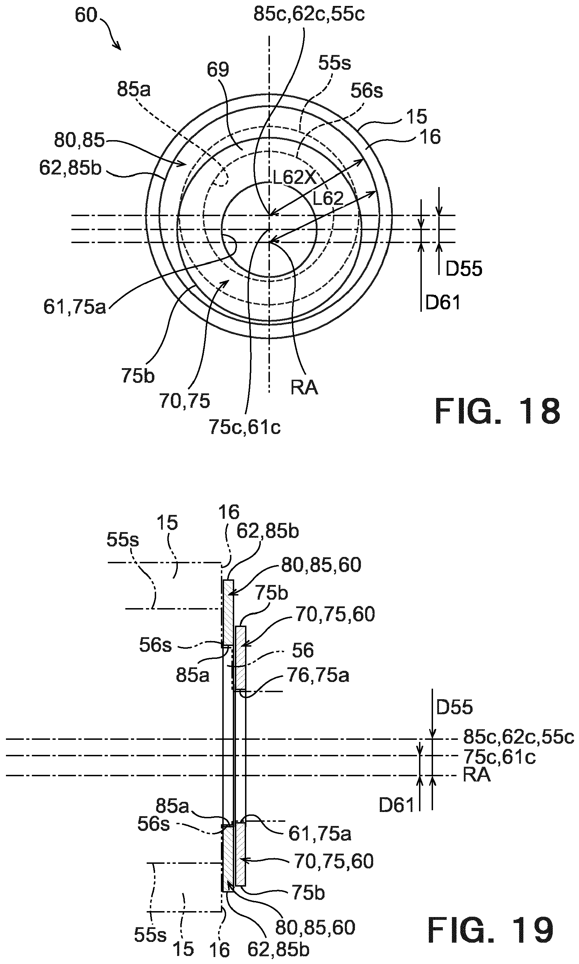

Unlike the example arrangement shown in Figs. 16 and 17, the center of the eccentric member 55 may coincide with the center of the outer edge 62. In the example shown in Figs. 18 and 19, the distance L62X from the center 55c of the eccentric member 55 to the outer edge 62 may be constant. The eccentric member 55 and second annular portion 85 may be concentrically arranged. According to this example, even if the second annular portion 85, which is located on the shaft member 50, rotates, the outer edge 62 of the restricting member 60 can avoid being positioned outside the bearing 15 in the radial direction D2. As a result, the outer edge 62 of the restricting member 60 can more effectively avoid touching the parts surrounding the eccentric member 55 and bearing 15, such as the external gear 40. In the example shown in Figs. 18 and 19, the bearing 15 has an annular region that is not covered by the second annular portion 85 and thus exposed when seen in the axial direction D1. In this manner, the lubricating oil can be smoothly supplied to the bearing 15.

According to the example shown in Figs. 18 and 19, the center 85c of the second inner circumferential edge 85a of the second annular portion 85 coincides with the center 55c of the eccentric member 55. The center of the protrusion 56 and step 56s supporting the second annular portion 85 in the radial direction D2 coincides with the center of the eccentric member 55. The protrusion 56 and step 56s may be made from the same material as the eccentric member 55 seamlessly by cutting using a lathe or the like.

According to the example illustrated in Figs. 15 to 17, the center 61c of the inner circumferential edge 61 is positioned on the axis of rotation RA of the shaft member 50. With this example arrangement, the shaft member 50 holding the inner annular portion 70 can be easily manufactured by means of cutting.

Note that, however, the example shown in Figs. 15 and 16 is not limitative. As shown in Fig. 18, the center 61c of the inner circumferential edge 61 may be shifted in the radial direction D2 from the axis of rotation RA of the shaft member 50. According to this example, the outer edge 62 can also avoid being positioned significantly outside the outer circumferential surface 55s in the radial direction D2.

As shown in Figs. 18 and 19, a shift D61 denotes how much the center of the inner circumferential edge 61 is shifted from the axis of rotation RA of the shaft member 50, and a shift D55 denotes how much the center of the eccentric member 55 is shifted from the axis of rotation RA of the shaft member 50. The shift D61 is less than the shift D55. According to this example, the outer edge 62 can avoid being positioned significantly outside the outer circumferential surface 55s in the radial direction D2 even though the center of the eccentric member 55 is significantly shifted from the center of rotation of the shaft member 50 on which the eccentric member 55 is provided.

The shift D61 representing how much the center of the inner circumferential edge 61 is shifted from the axis of rotation RA of the shaft member 50 may be half the shift D55 representing how much the center of the eccentric member 55 is shifted from the axis of rotation RA of the shaft member 50. When seen in the axial direction D1, the center 75c of the first annular portion 75 may be located between the center 85c of the second annular portion 85 and the axis of rotation RA of the shaft member 50. When seen in the axial direction D1, the center 75c of the first annular portion 75 may be at the middle point between the center 85c of the second annular portion 85 and the center of rotation RA of the shaft member 50. According to these examples, the outer edge 62 can more effectively avoid being positioned significantly outside the outer circumferential surface 55s in the radial direction D2 while the restricting member 60 can still reliably restrict the bearing 15 from moving in the axial direction D1.

According to the third specific example described above, the outer portion 80 has the annular portion 85 that is separately provided from the inner annular portion 70 and that has the inner circumferential edge 61 located on the shaft member 50. The inner circumferential edge 85a of the outer portion 80 and the outer circumferential edge 75b of the inner annular portion 70 delineate the annular portion 69, where the outer portion 80 and inner annular portion 70 face each other in the axial direction D1. According to the third specific example, the center 85c of the second annular portion 85 may be shifted in the radial direction D2 from the center 75c of the first annular portion 75. In this way, the outer edge 62 can avoid being positioned significantly outside the outer circumferential surface 55s in the radial direction D2 even though the center of the eccentric member 55 is significantly shifted from the center of rotation of the shaft member 50 on which the eccentric member 55 is provided. Therefore, even if the first and second annular portions 75 and 85, which are located on the shaft member 50, rotate, the present example arrangement can effectively prevent the outer edge 62 of the restricting member 60 from touching the parts surrounding the eccentric member 55 and bearing 15, such as the external gear 40. Additionally, the bearing 15 can be reliably restricted from moving in the axial direction D1.

As described above, the speed reducer 10 relating to one embodiment includes the external gear 40, the shaft member 50 having the eccentric member 55 for causing the external gear 40 to eccentrically oscillate, the bearing 15 disposed between the external gear 40 and the shaft member 50 and the restricting member 60. The restricting member 60 has the inner annular portion 70 and outer portion 80. The inner annular portion 70 has the inner circumferential edge 61 located on the shaft member 50, and the outer portion 80 restricts the bearing 15 from moving. The distance from the center 61c of the inner circumferential edge 61 to the outer edge 62 varies among different positions on the outer edge 62. This embodiment can effectively prevent the restricting member 60 from touching the parts surrounding the eccentric member 55 and bearing 15, such as the external gear 40, and also from damaging the surrounding parts. Accordingly, the restricting member 60 can reliably restrict the bearing 15, which is positioned between the eccentric member 55 and the external gear 40, from moving in the axial direction D1.

While the foregoing has described the embodiment with reference to specific examples, these specific examples are not intended to limit the embodiment. The foregoing embodiment can be implemented in various other specific forms and is susceptible to omission, replacement, and modification of various elements thereof within the purport of the invention.

For example, the restricting member 60 is applicable to the speed reducer having more than one shaft member 50 in the above-described examples, but the present embodiment is not limited to such. The restricting member 60 may be applied to the speed reducer having only a single shaft member 50 located on the main axis of rotation MRA.

The foregoing embodiments disclosed herein describe a plurality of physically separate constituent parts. They may be combined into a single part, and any one of them may be divided into a plurality of physically separate constituent parts. Irrespective of whether or not the constituent parts are integrated, they are acceptable as long as they are configured to solve the problems.

### LIST OF REFERENCE NUMBERS

10: speed reducer
15: bearing
20: casing
30: carrier
40: external gear
50: shaft member
55: eccentric member
60: restricting member
61: inner circumferential edge
61c: center
62: outer edge
L62: distance
65: step connecting portion
69: annular region
70: inner annular portion
71: inner tube
75: first annular portion
75a: first inner circumferential edge
75b: first outer circumferential edge
80: outer portion
81: outer tube
85: second annular portion
85a: second inner circumferential edge
85b: second outer circumferential edge

## Claims

1. A speed reducer (10) comprising:
an external gear (40, 40A, 40B);
a shaft member (50) including an eccentric member (55) for causing the external gear (40, 40A, 40B) to eccentrically oscillate;
a bearing (15) disposed between the external gear (40, 40A, 40B) and the shaft member (50); and
a restricting member (60) having an inner annular portion (70) and an outer portion (80), the inner annular portion (70) having an inner circumferential edge (61) located on the shaft member (50), the outer portion (80) having an outer edge (62) with a distance from a center of the inner circumferential edge (61) to the outer edge (62) varying among different positions on the outer edge (62), the outer portion (80) restricting the bearing (15) from moving in an axial direction (D1).

2. The speed reducer (10) of claim 1,
wherein the restricting member (60) has a step connecting portion (65) connecting the inner annular portion (70) and the outer portion (80),
wherein the eccentric member (55) has an annular step (56s) on a side surface thereof facing the restricting member (60) with a center of the annular step (56s) being shifted from the center of the inner circumferential edge (61), and
wherein the step (56s) and the step connecting portion (65) are in contact with each other, thereby restricting the restricting member (60) and the shaft member (50) from rotating relative to each other.

3. The speed reducer (10) of claim 2, wherein the step (56s) and the eccentric member (55) are concentric.

4. The speed reducer (10) of claim 2 or 3, wherein the step connecting portion (65) and the outer edge (62) are concentric.

5. The speed reducer (10) of any one of claims 2 to 4, wherein the inner annular portion (70) and the outer portion (80) are at least partially positioned in a same region in the axial direction (D1).

6. The speed reducer (10) of any one of claims 1 to 5, wherein the outer portion (80) has an outer tube (81) located on an outer circumferential surface of the eccentric member (55).

7. The speed reducer (10) of claim 6, wherein the inner annular portion (70) has an inner tube (71) located on the shaft member (50).

8. The speed reducer (10) of any one of claims 1 to 7, wherein the outer portion (80) and the inner annular portion (70) are integrated together.

9. The speed reducer (10) of any one of claims 1 to 7,
wherein the outer portion (80) has an annular portion (85) that is a separate portion from the inner annular portion (70) and that has an inner circumferential edge (85a) located on the shaft member (50), and
wherein the inner circumferential edge (85a) of the outer portion (80) and an outer circumferential edge (75b) of the inner annular portion (70) delineate an annular region where the outer portion (80) and the inner annular portion (70) face each other in the axial direction (D1).

10. The speed reducer (10) of claim 9,
wherein the inner annular portion (70) is annular,
wherein the outer portion (80) is annular, and
wherein a center of the outer portion (80) is shifted from a center of the inner annular portion (70) and located on the shaft member (50).

11. The speed reducer (10) of claim 9 or 10, wherein the eccentric member (55) has, on a side surface thereof facing the restricting member (60), an annular step (56s) that is in contact with the inner circumferential edge (85a) of the outer portion (80).

12. The speed reducer (10) of any one of claims 1 to 11, wherein a distance from a center of the eccentric member (55) to the outer edge (62) varies among different positions on the outer edge (62).

13. The speed reducer (10) of any one of claims 1 to 11, wherein the outer edge (62) and the eccentric member (55) are concentric.

14. The speed reducer (10) of any one of claims 1 to 13, wherein the restricting member (60) faces only a portion of the bearing (15) in the axial direction (D1).

15. The speed reducer (10) of any one of claims 1 to 14, wherein a center (61c) of the inner circumferential edge (61) is positioned on an axis of rotation (RA) of the shaft member (50).
